# EUROPÄISCHE PATENTANMELDUNG

(11) **EP 3 822 899 A1**
(43) Veröffentlichungstag der Anmeldung: **19.05.2021**
(21) Anmeldenummer: 19000515.7
(22) Anmeldetag: 12.11.2019
(51) Int. Cl.: G06Q 30/02

(54) **ANONYME ERFASSUNG UND AUSWERTUNG VON KONSUMENTENVERHALTEN**

(71) Anmelder: grapho metronic Mess- und Regeltechnik GmbH, 81669 München (DE); Solidsense GmbH, 71691 Freiberg am Neckar (DE)
(72) Erfinder: Kosok, Manuel, 86157 Augsburg (DE); Neumann, Michael, 70469 Stuttgart (DE)

(57) **Zusammenfassung**

Die Erfindung betrifft ein computerimplementiertes Verfahren zur anonymen Erfassung und Bewertung einer Verhaltensweise mindestens einer Person in einem Erfassungsbereich.

Der Erfindung liegt daher die Aufgabe zugrunde, eine Lösung zu schaffen, mit welcher die Resonanz von Personen auf die gewählten Marketingmaßnahmen wie Gestaltung der Ausstellungs- oder Verkaufsflächen, die Art der Präsentation von Exponaten oder der erste Eindruck des dargebotenen Exponats auf die betrachtende Person oder Personen mit technischen Mitteln und anhand von wissenschaftlichen Parametern bewerten zu können.

Das erfindungsgemäße Verfahren umfasst die Schritte, wonach eine Person mit einer Kamera erfasst, nach Auslesen der individuellen Biometriedaten der Person eine individuelle Identifikationsnummer zugewiesen wird und diese mit Kenngrößen wie beispielsweise Zeitpunkt und Ort der Erfassung abgespeichert werden.

## Beschreibung

Die Erfindung betrifft ein computerimplementiertes Verfahren zur anonymen Erfassung und Bewertung einer Verhaltensweise mindestens einer Person in einem Erfassungsbereich.

Für die Gestaltung von Ausstellungs-, Angebots- oder Verkaufsräumen sowie für die Entwicklung und Gestaltung von Produkten ist es unerlässlich, das Verhalten von Interessenten und/oder Konsumenten auf die jeweiligen Örtlichkeiten, Ausführungen der Ausstellungs- und/oder Verkaufsflächen und/oder auf einzelne zumeist neu verfügbare Produkte zu bewerten, um daraus Schlussfolgerungen für neue Ausführungen treffen zu können.

Für derartige Bewertungen von Interessenten und/oder Konsumenten sind diverse Marketingwerkzeuge wie Kundenumfragen, Befragungen, Auswertungen der Umsatzzahlen etc. bekannt, darüber hinaus erfolgt eine rein subjektive Bewertung der Kunden anhand allgemeiner Umstände, Besuchs- und/oder Verkaufszahlen etc.

Die bislang bekannten Bewertungen erfordern jedoch zumeist eine Mitwirkung der Besucher oder Konsumenten, bedeuten eine hohe Ressourcenbindung und sind deshalb beispielsweise für größere Messen teuer und für kleinere Messestände, Ausstellungsräume oder beispielsweise Schaufenster oder Auslagen nicht nutzbar, weshalb insbesondere bei den letztgenannten Orten eine faktenbasierte Bewertung der gewählten Marketingmaßnahme oder der zur Schau gestellten Exponate nicht möglich oder nicht vertretbar ist.

Der Erfindung liegt daher die Aufgabe zugrunde, eine Lösung zu schaffen, mit welcher die Resonanz von Personen auf die gewählten Marketingmaßnahmen wie Gestaltung der Ausstellungs- oder Verkaufsflächen, die Art der Präsentation von Exponaten oder der erste Eindruck des dargebotenen Exponats auf die betrachtende Person oder Personen mit technischen Mitteln und anhand von wissenschaftlichen Parametern bewerten zu können.

Diese Aufgabe wird durch ein Verfahren gemäß Anspruch 1 gelöst. Das erfindungsgemäße Verfahren umfasst die folgenden Schritte:
- Erfassen des Erfassungsbereiches mit mindestens einer Kamera mit einem zugehörigen Abbildungsbereich,
- Erfassen der mindestens einen in dem jeweiligen Abbildungsbereich befindlichen Person mit der mindestens einen Kamera,
- Individuelle Erkennung der mindestens einen Person anhand von individuellen Biometriedaten und Abgleich der erfassten individuellen Biometriedaten mit bereits in einem definierten Zeitraum erfassten und in einem elektronischen Speicher abgespeicherten und abrufbaren, jeweils mit einer Identifikationsnummer zugeordneten Biometriedaten,
   ▪ für den Fall der in dem definierten Erfassungszeitraum erstmaligen Erfassung individueller Biometriedaten Vergabe einer neuen Identifikationsnummer für diese spezifischen Biometriedaten,
   ▪ für den Fall der in dem definierten Erfassungszeitraum wiederholten Erfassung von bereits in dem Speicher abgespeicherten Biometriedaten Zuordnung der erneuten Erfassung dieser Biometriedaten zur bereits hierzu zugehörigen Identifikationsnummer,
- Speicherung der aktuellen Erfassung der zu den Biometriedaten zugehörigen Person oder Personen anhand der Abspeicherung dieses Ereignisses zur jeweiligen Identifikationsnummer einschließlich der relevanten Kenngrößen wie beispielsweise Zeitpunkt, Ort, Abbildungsbereich.

Ein derartiges Verfahren bietet den Vorteil, dass ohne besonderen personellen Aufwand eine anonyme, zielgruppenspezifische Bewertung der Wahrnehmung der Marketingmaßnahmen und/oder des ausgestellten Produktes anhand von erfassten Parametern und somit mittels einer wissenschaftlichen Bewertung vorgenommen werden kann.

So kann beispielsweise anhand einer Gesichtserkennung die Stimmung des Betrachters eines Exponates zu einem beliebigen Zeitpunkt erfasst werden. Ferner ist es möglich, die Aufenthaltsdauer an diversen Orten oder Exponaten, die Anzahl der Betrachter insgesamt oder pro Zeiteinheit, die Häufigkeit der wiederholten Besuche eines bestimmten Ortes oder Exponates und/oder die Art der Personengruppe, welche einen Ort oder ein Exponat am häufigsten und/oder interessiertesten besucht bzw. besichtigt, anhand von erfassten Parametern dokumentiert und analysiert werden.

Ferner ist es durch das erfindungsgemäße Verfahren beispielsweise möglich, derartige durch Parameter erfasste Verhaltensweisen für unterschiedliche Örtlichkeiten und/oder Gestaltungen der Räumlichkeiten und/oder Umgebungsparameter abzuspeichern und im Nachgang auszuwerten, so dass hierdurch auch eine Bewertung der Produktvermarktung und/oder der Marketingstrategie möglich ist.

Gemäß einer Ausgestaltung der Erfindung wird der Erfassungsbereich, in welchem mindestens ein als Exponat bezeichnetes Erfassungsobjekt platziert ist, mit jeweils einer dem Erfassungsobjekt zugeordneten Kamera erfasst.

Diese Zuordnung, wonach einem Erfassungsobjekt eine Kamera zugewiesen ist, hat den Vorteil, dass die Personen und somit die Verhaltensweisen der das Exponat betrachtenden Personen anonym aufgezeichnet und somit die zugehörigen Parameter wie Aufenthaltsdauer, Häufigkeit des Erscheinens, aber auch aus der Statur und/oder aus den Gesichtsdaten ableitbaren Parametern wie Alter, Geschlecht, Stimmung zu jedem beliebigen Zeitpunkt der Anwesenheit der Person erfasst oder hergeleitet werden können.

Gemäß einer weiteren Ausgestaltung der Erfindung können alle dem Erfassungsbereich zugeordneten Kameras oder deren zugeordneten Rechner die erfassten Daten mittelbar oder unmittelbar an eine übergeordnete Recheneinrichtung und/ oder Speichereinrichtung übermitteln.

Hierbei ist es möglich, zum einen die permanent oder vorzugsweise nur im Falle der Anwesenheit einer Person im Abbildungsbereich einer Kamera erstellten Bilder direkt in der Rechen- und/oder Speichereinrichtung abzuspeichern, um diese nach der Übertragung und/oder Speicherung hinsichtlich der Parameter der erfassten Person oder Personen auszuwerten.

Es ist jedoch auch möglich, dass die permanent oder vorzugsweise nur im Falle der Anwesenheit einer im Abbildungsbereich einer Kamera befindlichen mindestens einen Person erstellten Bilder zunächst einer unmittelbar der Kamera zugeordneten Recheneinheit hinsichtlich der Parameter ausgewertet werden, so dass dann lediglich diese Parameter an eine übergeordnete Recheneinrichtung und/oder Speichereinrichtung übermittelt werden, so dass auf dieser übergeordneten Rechen- und/ oder Speichereinrichtung keine durch die entsprechende Kamera aufgenommenen Aufnahmen erfasst bzw. abgespeichert werden müssen.

Eine derartige Ausgestaltung hat den Vorteil, dass eine zentrale Auswertung für einen Erfassungsbereich, welcher mit mehreren Kameras ausgestattet und somit in mehrere Abbildungsbereiche unterteilt ist, möglich ist. Der Erfassungsbereich kann somit auch in eine Mehrzahl von räumlich getrennten Abbildungsbereichen mit jeweils unterschiedlichen oder identischen Erfassungsobjekten unterteilt sein, wobei dennoch eine gemeinsame Auswertung für alle Erfassungsobjekte möglich ist.

Insbesondere die Variante, bei welcher die von der Kamera in deren Erfassungsbereich erfassten Personen unmittelbar von der der Kamera zugeordneten Recheneinheit in entsprechende Parameter wie Alter, Geschlecht, Aufenthaltsdauer, Stimmungsparameter und viele weitere im Nachgang beschriebene Parameter umgerechnet werden, um diese an eine übergeordnete Recheneinrichtung weiterzuleiten und dort zur Auswertung abzuspeichern, bietet den Vorteil, dass die Erfassung und Auswertung vollkommen anonym erfolgt. Rein schon aufgrund dieses Funktionsprinzips, nämlich die Erkennung von Personen anhand eindeutiger Konturen oder üblicher menschlicher Gesichtsmerkmale, ist es somit unmöglich, die persönlichen Daten der Betrachter wie Name oder sonstige persönliche Daten in Erfahrung zu bringen, weshalb diese Art der Aufzeichnung und Auswertung per se anonym ist. Insbesondere jedoch die beschriebene Variante, bei welcher nicht einmal mehr die Aufzeichnung und somit die Abspeicherung der erfassten Bilder erforderlich ist, sondern nur mehr die unmittelbar erfassten Parameter abgespeichert werden, ist eine maximal mögliche Anonymität erreicht, da in diesem Fall keine Bilder, Videosequenzen etc. von dem entsprechenden Abbildungsbereich vorhanden sind.

Gemäß einer weiteren Ausgestaltung der Erfindung wird einer jeden erfassten Person und/oder zu den erfassten Daten einer erfassten Person eine Identifikationsnummer zugeordnet, welcher mindestens einer der erfassten Parameter Verweildauer im Erfassungsbereich, Laufwege, Verweildauer an einem jeweiligen Erfassungsobjekt abgespeichert und ausgewertet wird.

Eine derartige Lösung hat den Vorteil, dass im Rahmen der Genauigkeit der Personen- und/oder Gesichtserkennung Mehrfachauswertungen ausgeschlossen werden können und eine Aussage zur Häufigkeit des wiederholten Besuches oder des wiederholten Besichtigens eines Erfassungsobjektes wie beispielsweise eines ausgestellten Exponates getroffen werden können. Denn nach Zuordnung einer rein systeminternen Identifikationsnummer zu den erfassten Gesichtsparametern kann diese erfasste Person bei jedem erneuten Erscheinen im Erfassungsbereich wieder zu ihrer Identifikationsnummer zugewiesen werden. Somit kann sehr einfach ausgewertet werden, welche Gesamtzahl an Individuen beispielsweise den Ausstellungsbereich, Verkaufsraum oder ein spezielles Exponat besichtigt haben, und wieviele Personen diesen beispielhaften Ausstellungsbereich, einen Verkaufsraum oder ein spezielles Exponat wiederholt und somit mehrfach besucht haben.

Da diese Identifikationsnummer rein intern vergeben wird, ist die Erfassung und Auswertung der erfassten und aufgezeichneten Daten dennoch vollumfänglich anonym, da es sich bei dieser systeminternen Identifikationsnummer um eine vorzugsweise fortlaufende Nummer handelt, so dass jedwede Zuordnungen zu personenbezogenen Daten wie beispielsweise die Namen nicht möglich ist, zumal diese aufgrund der ausschließlichen Erfassung von insbesondere den Gesichtsmerkmalen schon gar nicht bekannt sein können.

Gemäß einer weiteren Ausgestaltung der Erfindung wird für die mindestens eine erfasste Person oder im Falle von mehreren erfassten Personen für jede erfasste Person zu mindestens einem definierten Zeitpunkt ein Gefühlszustand erfasst und mittels eines daraus abgeleiteten Emotionsparameters mit einem jeweiligen Zeitstempel in der Speichereinrichtung zur zugehörigen Identifikationsnummer abgespeichert.

Diese Ausgestaltung weist den Vorteil auf, dass nicht nur die Parameter wie Anwesenheit, Aufenthaltsdauer und weitere erfasst und abgespeichert werden, sondern dass auch die Gefühlsstimmung als auch deren zeitliche Veränderung während des Aufenthalts im entsprechenden Abbildungsbereich bewertet werden kann, um daraus entsprechende Rückschlüsse ziehen zu können.

Die Bestimmung der entsprechenden Emotionsparameter erfolgt anhand von Gesichtsdaten der entsprechenden Person. So ist es aus dem Stand der Technik bekannt, dass anhand der typischen Gesichtsparameter wie beispielsweise der Kopfgröße, der Kopfform, den Augen, dem Mund und beispielsweise deren Proportionen zueinander statistisch gesehen wahrscheinliche wesentliche Parameter der erfassten Person wie Geschlecht, Alter, aber auch den Gefühlszustand in entsprechenden Kategorien wie beispielsweise fröhlich, verärgert, genervt, gelangweilt
oder interessiert abzuleiten.

Der so abgeleitete, statistisch gesehen wahrscheinlichste, Gefühlszustand der erfassten Person wird zur späteren faktenbasierten Auswertung in einen Emotionsparameter umgerechnet, was beispielsweise anhand von einer ein- oder mehrdimensionalen Matrix erfolgen kann.

Am Beispiel einer eindimensionalen Matrix könnten beispielsweise für einen positiven Gemütszustand als Emotionsparameter positive Zahlen beispielsweise von 1 bis 10, und für einen negativen Gemütszustand als Emotionsparameter negative Zahlen, beispielsweise von -1 bis -10 vergeben werden, so dass eine emotional unberührte Person den Emotionsparameter Null erhält.

Diese Ausgestaltung der Erfindung hat den Vorteil, dass der ansonsten nur mit diversen Begrifflichkeiten bezeichnete Gefühlszustand in einen eindeutigen und somit rechnerisch verwertbaren Parameter umgewandelt wird. Dies bietet ferner den Vorteil, dass wenn der Emotionsparameter mehrfach über einen definierten Zeitraum hinweg erfasst und ermittelt wird, beispielsweise in definierten Zeitintervallen von beispielsweise 1, 5 oder 10 Sekunden, dass somit eine Mehrzahl von Emotionsparameter zu zugeordneten Zeitpunkten vorliegen.

Dies wiederum bietet den Vorteil, dass anhand der Mehrzahl der erfassten und vorzugsweise mit einem Zeitstempel hinterlegten Emotionsparametern ein Emotionsverlauf und/oder Emotionsgradient als Funktion der Zeit erstellt wird. Aus einem solchen Emotionsverlauf und/oder Emotionsgradient als Funktion der Zeit lässt sich somit wissenschaftlich ableiten, ob sich beispielsweise der Gemütszustand der erfassten Person oder der Mehrzahl der erfassten Personen bei Aufenthalt im Erfassungsbereich verbessert oder verschlechtert, ob durch das Exponat oder die Darbietung des Exponats das Interesse der betrachteten Personen geweckt und gehalten werden kann oder ob diese sich gelangweilt oder genervt von diesem abwenden.

Gemäß einer Ausgestaltung der Erfindung wird zusätzlich zum Erfassen der Personen auch mindestens einer der Umgebungsparameter wie beispielsweise Uhr- oder Tageszeit, Wochentag, Umgebungstemperatur und/oder Schallpegel im Abbildungsbereich, der Wellenlängenbereich und somit die Farbe des Umgebungslichts und/oder die Besucherdichte erfasst und in der Speichereinrichtung abgespeichert.

Eine derartige Ausgestaltung hat den Vorteil, dass somit auch der Einfluss von einem oder von mehreren Umgebungsparametern auf das Besucherverhalten in einer wissenschaftlichen, rechnergestützten Auswertung möglich ist. Dies kann aufgrund der ermittelten Daten ganz pauschal oder auch Zielgruppen-spezifisch, beispielsweise abhängig von Alter und/oder Geschlecht erfolgen.

Weitere Ausgestaltungen der Erfindung können der nachfolgenden Figurenbeschreibung entnommen werden. Hierbei zeigt:

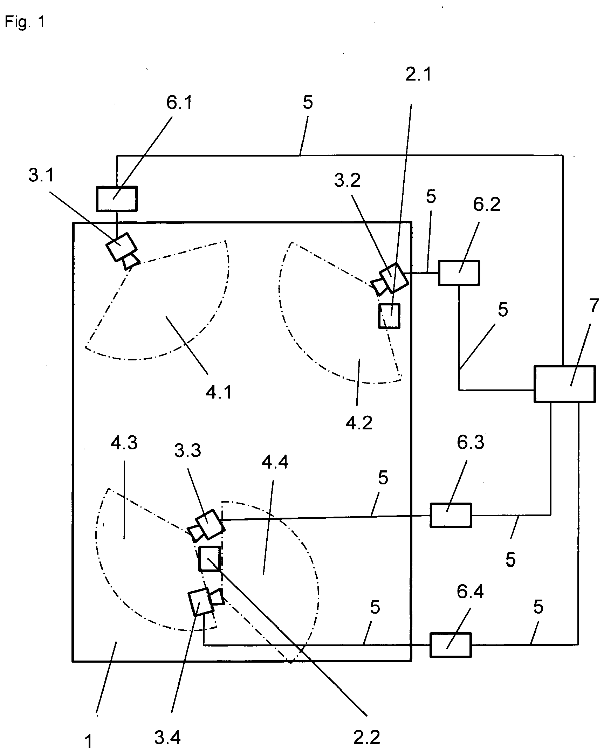

- Fig. 1: einen beispielhaften Erfassungsbereich mit mehreren Abbildungsbereichen und darin enthaltenen Exponaten

Fig. 1 zeigt eine beispielhafte Ausgestaltung einer Anwendung der vorliegenden Erfindung. Der Vollständigkeit halber wird hierbei erwähnt, dass viele andersartige Ausgestaltungen möglich sind, welche auf die jeweiligen räumlichen und hinsichtlich der Relevanz der Auswertung angepasst werden können.

Fig. 1 zeigt einen Erfassungsbereich 1, welcher üblicherweise als Verkaufsraum, als Ausstellungsfläche auf einer Messe oder als Ausstellungsraum eines Händlers ausgestaltet ist. Wenngleich in Fig. 1 nicht dargestellt, so kann es sich bei dem Erfassungsbereich 1 auch um ein Schaufenster oder einen speziellen Ausstellungsbereich handeln.

In dem Erfassungsbereich 1 sind beispielhaft zwei als Erfassungsobjekt 2 bezeichnete Exponate dargestellt, wobei es sich bei den Erfassungsobjekten 2 nicht zwingend um explizite Exponate handeln muss, ein Erfassungsobjekt 2 kann auch ein Verkaufsbereich für ein spezielles Produktsortiment oder ähnliches sein.

Der Bereich vor dem ersten Erfassungsobjekt 2.1 wird von einer Kamera 3.2 erfasst, die einen Abbildungsbereich 4.2 optisch abdecken und auswerten kann. Eine jede Kamera 3 hat somit abhängig von der Auflösung, dem eingesetzten Objektiv etc. einen Abbildungsbereich 4, in welchem die darin erfassten Personen auf der Kamera 3 abgebildet und somit hinsichtlich deren Parameter ausgewertet werden können. Da der Abbildungsbereich üblicherweise räumlich begrenzt ist, können somit einem Erfassungsobjekt 2 auch eine Mehrzahl von Kameras 3 zugeordnet sein. So ist am Beispiel des zweiten Erfassungsobjektes 2.2 beispielhaft dargestellt, dass der Bereich um das zweite Erfassungsobjekt 2.2 mittels zwei Kameras 3.3 und 3.4 mit deren zugehörigen Abbildungsbereichen 4.3 und 4.4 erfasst wird.

Um das Verhalten von Personen innerhalb des Erfassungsbereiches 1 abseits der Erfassungsobjekte 2 erfassen und auswerten zu können, kann es somit auch erforderlich oder sinnfällig sein, eine oder mehrere Kameras 3 auch abseits von Erfassungsobjekten 2 anzuordnen, wie beispielhaft anhand der ersten Kamera 3.1 mit zugehörigem Abbildungsbereich 4.1 in Fig. 1 dargestellt ist.

Wenngleich nicht in Fig. 1 dargestellt, so ist es auch möglich, den gesamten Erfassungsbereich 1 mit einer derartigen Anzahl von Kameras 3 auszustatten, dass der gesamte Erfassungsbereich 1 durch die den jeweiligen Kameras 3 zugehörigen Abbildungsbereichen 4 abgedeckt ist, so dass eine permanente Erfassung der sich im Erfassungsbereich 1 befindlichen Personen sichergestellt ist.

Hierbei ist es selbstverständlich, dass die Zuordnung einer Kamera 3 und des zugehörigen Abbildungsbereiches 4 innerhalb des Erfassungsbereiches 1 zu dokumentieren und abzuspeichern, um die darin erfassten Daten der Örtlichkeit und/oder dem jeweiligen Erfassungsobjekt 2 zuordnen zu können.

Wenngleich Fig. 1 einen räumlich vermeintlich zusammenhängenden Erfassungsbereich 1 darstellt, so wird hierzu angemerkt, dass der Erfassungsbereich 1 räumlich nicht zwingend zusammenhängend sein muss. Es ist somit auch möglich, den Erfassungsbereich 1 über mehrere räumlich getrennte Örtlichkeiten zu verteilen, wobei an jeder separaten Örtlichkeit mindestens eine Kamera 3 mit dem zugehörigen Erfassungsbereich 1 angebracht ist. Somit können beispielsweise die Daten für unterschiedliche Standorte einer Einzelhandelskette dennoch gemeinsam ausgewertet werden.

Die mindestens eine Kamera 3 kann entweder ohne zusätzliche Beleuchtung ausgestattet sein und somit ausschließlich die durch die Umgebungsbeleuchtung im Abbildungsbereich 4 sichergestellte Helligkeit beleuchteten Personen erfassen. Es ist jedoch auch möglich, dass mit jeder Kamera 3 mindestens eine in Fig. 1 nicht dargestellte zusätzliche Beleuchtungseinheit verbaut ist, welche entsprechend den jeweiligen räumlichen Gegebenheiten und Lichtverhältnissen ausgeführt und angeordnet ist.

Um Reflexionen oder den Einfluss von insbesondere variabler Beleuchtung eines Abbildungsbereiches 4 zu vermeiden, ist es auch möglich, im Bedarfsfalle den jeweils betreffenden Abbildungsbereich 4 mit zusätzlichen Beleuchtungseinheiten auszuleuchten, deren Wellenlänge in etwa 900 bis 1000 nm und somit knapp außerhalb des sichtbaren Bereiches liegt. In diesem Fall ist durch entsprechende Wahl der jeweiligen Kamera 3 oder des der Kamera 3 vorgeschalteten Filters sicherzustellen, dass die entsprechende Kamera 3 auch diesen Wellenlängenbereich erfassen und abbilden kann. Die hierdurch erzeugten Bilder, welche Graustufenbildern ähneln, sind für die Erfassung und Erkennung der erforderlichen Kenngrößen der erfassten Personen vollkommen ausreichend.

Als Kamera 3 kommen vorzugsweise handelsübliche Digitalkameras wie beispielsweise CMOS-Sensoren zum Einsatz, welche entweder Farb- oder Schwarz-weiß-Bilder erfassen können.

In Fig. 1 sind beispielhaft zwei unterschiedliche Recheneinrichtungen 6, 7 dargestellt: eine erste Recheneinrichtung 6, welche unmittelbar der jeweiligen Kamera 3 zugeordnet ist, falls erforderlich, die Funktion der ihr zugeordneten Kamera 3 sicherstellt und beispielhaft, wenngleich nicht zwingend die Auswertung der Biometriedaten übernimmt. Die ersten Recheneinrichtungen 6 können optional auch in die Kameras 3 integriert sein.

In der zweiten Recheneinrichtung 7 werden die von den Kameras 3 erfassten und/ oder von den ersten Recheneinrichtungen 6 ermittelten Daten zentralisiert erfasst, um somit die Daten für den gesamten Erfassungsbereich 1 verwalten und zur Verfügung stellen zu können.

Auch wenn die ersten Recheneinrichtungen 6 und die zweite Recheneinrichtung 7 dem besseren Verständnis wegen als räumlich getrennte Rechner dargestellt sind, so ist es alternativ auch möglich, die gesamte Rechenkapazität in eine einzige Recheneinrichtung zu integrieren, abhängig von der Rechnerleistung, der Anzahl der Kameras 3 und/oder der räumlichen Trennung der einzelnen Kameras 3 und deren zugeordneten Abbildungsbereichen 4.

Wenngleich nicht gesondert in Fig. 1 dargestellt, so verfügt eine jede oder die eine zentrale Recheneinrichtung 6, 7 über einen integrierten Datenspeicher, um die erfassten Daten und Parameter speichern zu können, weshalb nachfolgend die Speicherfunktion als Teilfunktion einer Recheneinrichtung 6, 7 behandelt wird.

Da das erfindungsgemäße Verfahren für alle Erfassungsobjekte 2 identisch ist, wird die grundsätzliche Funktion beispielhaft am ersten Erfassungsobjekt 2.1 und der zugehörigen Kamera 3.2 beschrieben, wenngleich aufgrund der Irrelevanz des Erfassungsobjektes 2 und der Kamera 3 nachfolgend dort lediglich die neutralen Bezugszeichen verwendet werden. Die zweite Stelle der Bezugszeichen wird nur dort verwendet, wo dies für die Beschreibung der Erfindung von Vorteil ist.

Das erfindungsgemäße Verfahren dient zur Erfassung und Bewertung einer Verhaltensweise mindestens einer Person, welche sich im Erfassungsbereich 1 befindet oder diesen betritt, und umfasst folgende Schritte:
Die mindestens eine im Erfassungsbereich 1 befindliche Person wird von der mindestens einen Kamera 3 erfasst, wenn sich die Person im, der entsprechenden Kamera 3 zugehörigen Abbildungsbereich 4 befindet. Dies kann entweder dadurch erfolgen, dass die Kamera 3 dann aktiviert wird, wenn sich eine Person im Abbildungsbereich 4 befindet, das heißt, dass die Kamera 3 beispielsweise wie ein Bewegungsmelder funktioniert.

Es ist jedoch auch möglich, dass mit der Kamera 3 in regel- oder unregelmäßigen Zeitintervallen von beispielsweise 1, 5 oder 10 Sekunden ein Bild oder eine Videosequenz des Abbildungsbereiches 4 aufgezeichnet wird und dass anhand der, der Kamera 3 zugeordneten und/oder übergeordneten Recheneinrichtung 6, 7 ausgewertet wird, ob eine Person in dem Abbildungsbereich 4 erfasst wurde. Falls dies der Fall ist, werden die Daten wie nachfolgend erläutert ausgewertet und analysiert, ansonsten wird das Bild oder die Videosequenz nicht weiter als relevant betrachtet.

Wird von der Kamera 3 eine sich im Abbildungsbereich 4 befindliche Person erfasst und mittels eines Bildes oder einer Videosequenz erfasst, so erfolgt die individuelle Erkennung einer jeden aufgezeichneten oder der mindestens einen aufgezeichneten Person anhand der jeweiligen personenspezifischen Biometriedaten. Hierzu werden vorzugsweise, jedoch nicht zwingend ausschließlich die Biometriedaten des Gesichtes ausgewertet, wofür aus dem Stand der Technik eine entsprechende Gesichtserkennungssoftware bekannt ist.

Aus den individuellen Biometriedaten, wie beispielsweise Kopfgröße und/oder Kopfform und/oder Anordnung und/oder Größe der Augen und/oder der Nase und/oder des Mundes und/oder des Kinns kann eine Person zwar anonym, aber jedoch als einmaliges Individuum erfasst und definiert werden.

Als Biometriedaten können neben dem Gesicht zusätzlich oder alternativ die Größe und/oder die Statur einer jeden erfassten Person verwendet werden.

Anhand der bereits in einem definierten Zeitraum und in einem elektronischen Speicher der ersten oder zweiten Recheneinrichtung 6, 7 bereits abgespeicherten und abrufbaren Biometriedaten kann anhand der bereits erfolgten oder noch nicht erfolgten Zuordnung einer Identifikationsnummer zu den vorab erfassten Biometriedaten folgende Fallunterscheidung durchgeführt werden:
Wurde eine Person mit zu der Person zugehörigen individuellen Biometriedaten noch nicht von einer Kamera 3 im Erfassungsbereich 1 erfasst und/oder in einer Recheneinrichtung 6, 7 abgespeichert, so wird im Falle der erstmaligen Erfassung dieser Biometriedaten eine neue Identifikationsnummer für diese spezifischen Biometriedaten vergeben. Dies kann entweder durch die der Kamera 3 unmittelbar zugeordnete erste Recheneinrichtung 6 oder durch die gegebenenfalls mehreren Kameras 3 übergeordnete zweite Recheneinrichtung 7 erfolgen, wobei sich eine jede erste Recheneinrichtung 6 vorzugsweise simultan mit der zweiten Recheneinrichtung 7 abgleicht.

Im übertragenen Sinne ist somit einer jeden erfassten Person eine einzige Identifikationsnummer zugeordnet, da diese eine Korrelation über die individuellen Biometriedaten darstellt. Die erfasste Person bleibt aber dennoch vollkommen anonym, da persönliche Daten wie beispielsweise der Name oder ähnliches nicht bekannt sind und mittels einer Kamera 3 nicht erfasst werden können.

Diese neu vergebene, rein systeminterne Identifikationsnummer wird in der ersten Recheneinrichtung 6 oder vorzugsweise in der übergeordneten zweiten Recheneinrichtung 7 samt der zugehörigen Biometriedaten abgespeichert.

Wurde die betreffende Person jedoch bereits in einem definierten Zeitraum schon einmal von einer Kamera 3 in einem Abbildungsbereich 4 erfasst, so dass zu den individuellen Biometriedaten der erfassten Person bereits eine Identifikationsnummer vergeben wurde, so wird die erneute Erfassung dieser Biometriedaten zur bereits hierzu zugehörigen Identifikationsnummer erfasst und abgespeichert.

Zu dieser neu vergebenen oder bereits vorhandenen Identifikationsnummer wird die aktuelle Erfassung der zu der Identifikationsnummer zugehörigen Biometriedaten und somit der zu der Identifikationsnummer zugehörigen Person als neues Ereignis einschließlich der relevanten Kenngrößen hierzu abgespeichert. Die Kenngrößen umfassen in diesem Zusammenhang den Zeitpunkt, was beispielsweise mittels Abspeicherung eines Zeitstempels erfolgt, der entsprechende Ort im Sinne des Abbildungsbereiches 4 sowie optional die Lage der Person innerhalb des Abbildungsbereiches 4 und/oder das über die Gesichtserkennung ermittelte Alter und/oder Geschlecht der Person.

Durch Abspeicherung dieser Daten in der übergeordneten zweiten Recheneinrichtung 7 kann somit auch eine bereits ermittelte Identifikationsnummer sowie die zur Identifikationsnummer zugeordnete Person durch die zur Identifikationsnummer zugehörigen Biometriedaten wiedererkannt werden, wenn diese von einer beliebigen Kamera 3 mit einem zugehörigen beliebigen Abbildungsbereich 4 innerhalb des Erfassungsbereiches 1 erfasst werden.

Am Beispiel von Fig. 1 bedeutet dies, dass eine Person mit individuellen Biometriedaten, welche erstmalig durch Kamera 3.1 im Abbildungsbereich 4.1 erfasst wurde und einer Identifikationsnummer zugeordnet wurde, auch mit der zugehörigen Identifikationsnummer als solche anonym erkannt wird, wenn dieselbe Person von der Kamera 3.2 und/oder 3.3 und/oder 3.4 erfasst wird.

Durch Wiederholung dieser Verfahrensschritte kann somit der Erfassungsbereich 1 dauerhaft erfasst und die erfassten Daten über den definierten Erfassungszeitraum aufsummiert werden. Der definierte Erfassungszeitraum kann beispielsweise die Dauer einer Ausstellung, die Dauer einer besonderen Werbemaßnahme oder jahreszeitliche Perioden wie die Vorweihnachtszeit oder der Karneval sein.

Dieses Verfahren wird vorzugsweise dann angewendet, wenn der Erfassungsbereich 1 mindestens ein Erfassungsobjekt 2 mit jeweils mindestens einer einem Erfassungsobjekt 2 zugeordneten Kamera 3 umfasst.

Wie in Fig. 1 dargestellt, kann so der Bereich vor oder um ein Erfassungsobjekt 2 mittels einer oder mehreren Kameras 3 abgedeckt und zur Auswertung erfasst werden. Derartige Erfassungsobjekte 2 können beispielsweise Exponate, zur Schau gestellte Neuentwicklungen, Prototypen, eine Produktkollektion, eine spezifische Verkaufsfläche oder ähnliches sein, was die Aufmerksamkeit der Personen im Allgemeinen auf sich ziehen soll. Wenngleich nicht in Fig. 1 dargestellt, so können die Erfassungsobjekte 2 auch räumlich getrennt sein, wie beispielsweise verschiedene Bereiche auf einer Messe oder unterschiedliche, räumlich voneinander getrennte Verkaufsräume einer Handelskette.

Wenn wie in Fig. 1 dargestellt, in einem Erfassungsbereich 1 eine Mehrzahl von Kameras 3 angeordnet ist, werden somit die im Erfassungsbereich 1 von den Kameras 3 erfassten Daten entweder mittelbar über die erste Recheneinrichtung 6 oder unmittelbar an eine übergeordnete zweite Recheneinrichtung 7 übermittelt.

Dies erfolgt über Datenleitungen 5, wobei es sich hierbei nicht zwingend um physikalische Datenleitungen 5 wie beispielsweise Telekommunikationsleitungen handeln muss, da der Datentransport optional auch über berührungsfreie Übertragungsmöglichkeiten wie beispielsweise WLAN erfolgen kann.

Durch das Zusammenführen der ermittelten Daten an eine übergeordnete zweite Erfassungseinrichtung 7 kann somit anhand der Erfassung der mindestens einen Person sowie der Zuordnung der erfassten Daten einer Person zu einer Identifikationsnummer durch mindestens eine Kamera 3 einer Identifikationsnummer mindestens einer der Parameter Verweildauer im Abbildungsbereich 4, Verweildauer im Erfassungsbereich 1, Laufwege, Verweildauer an einem jeweiligen Erfassungsobjekt 2 und ähnliche Daten ermittelt werden.

Auf das Beispiel von Fig. 1 bezogen bedeutet dies, dass aufgrund der aufgezeichneten Daten nachvollzogen werden kann, ob sich eine Person, die im Erfassungsbereich 1 erstmalig im Abbildungsbereich 4.1 erfasst wurde, von dort aus in einen der anderen Abbildungsbereiche 3.2 bis 3.4 begeben hat, so dass anhand der zeitlichen Reihenfolge der Erfassung dieser Person in den anderen Abbildungsbereichen 3.2 bis 3.4 die Laufwege dieser namentlich selbstverständlich nicht bekannten Person nachvollzogen als auch die jeweiligen Aufenthaltsdauern in den jeweiligen Abbildungsbereichen 3.1 bis 3.4 bestimmt werden können. Bei einer Mehrzahl von anonym erfassten Personen lässt sich somit eine Bewertung zu einem mehrheitlichen Bewegungs- und Aufenthaltsverhalten herleiten.

Da es mittels bekannter Gesichtserkennungsprogramme möglich ist, von einer mittels einer Kamera 3 erfassten Person den zumindest statistisch gesehen wahrscheinlichen Gefühlszustand zu bestimmen, kann somit für die mindestens eine erfasste Person oder im Falle von mehreren erfassten Personen zu mindestens einem, vorzugsweise zu jedem erfassten Zeitpunkt der jeweilige Gefühlszustand erfasst werden. Dies erfolgt vorzugsweise in einer der jeweiligen Kamera 3 zugeordneten ersten Recheneinrichtung 6, da in diesem Fall die Bilder oder Videosequenzen zur Auswertung nicht an die übergeordnete zweite Recheneinrichtung 7 gesendet werden müssen, kann alternativ aber auch von der zweiten Recheneinrichtung 7 ausgeführt werden.

Um den Gefühlszustand wissenschaftlich verwenden zu können, wird dieser in einen Emotionsparameter klassifiziert, beispielsweise linear auf einer Skala von -10 bis +10. Dieser Emotionsparameter wird mit einem Zeitstempel, das heißt mit Hinterlegung der Uhrzeit der jeweiligen Erfassung in der ersten Recheneinrichtung 6 oder in der zweiten Recheneinrichtung 7 zur zugehörigen Identifikationsnummer abgespeichert.

Auf das in Fig. 1 bezogene Beispiel bedeutet dies, dass für eine Person, welche in allen vier Abbildungsbereichen 4.1 bis 4.4 mittels der zugehörigen Kameras 3.1 bis 3.4 erfasst wird, der Gemütszustand dieser Person in jeder dieser vier Abbildungsbereichen 4.1 bis 4.4 ermittelt wird. Somit kann nachvollzogen werden, ob bzw. wann im Sinne von in welchem Abbildungsbereich 4 eine Person beispielsweise bei guter Laune, bei schlechter Laune, genervt, entspannt, interessiert oder desinteressiert war. So kann beispielsweise analysiert werden, welches der Erfassungsobjekte 2.1 oder 2.2 von der Person interessiert oder desinteressiert betrachtet wurde.

Diese Emotionsparameter können über einen entsprechenden Zeitraum hinweg wiederholt, beispielsweise in Intervallen von einer, fünf oder 10 Sekunden ermittelt werden, die erfassten Emotionsparameter können mit einem Zeitstempel in der ersten Recheneinrichtung 6 und/oder in der zweiten Recheneinrichtung 7 abgespeichert werden.

Durch Erfassung und Hinterlegung einer Mehrzahl von Emotionsparametern kann somit ein Emotionsverlauf und/oder ein Emotionsgradient als Funktion der Zeit erstellt werden.

Bezogen auf das in Fig. 1 dargestellte Beispiel ist es somit möglich, zu ermitteln, ob eine Person beim Betrachten einer der Erfassungsobjekte 2.1 oder 2.2 einen gleichbleibenden Gemütszustand aufweist, ob die Person bei Betrachten eines Erfassungsobjektes 2 sich nach ursprünglichem Interesse irgendwann gelangweilt davon abwendet, oder ob das Interesse bei Betrachten eines Erfassungsobjektes 2 sogar noch gesteigert wurde.

Des Weiteren kann daraus abgeleitet werden, wie sich der Gemütszustand während des Aufenthaltes im Erfassungsbereich 1 verändert, das heißt ob die Stimmung oder das Interesse während des Aufenthaltes im Erfassungsbereich 1 gleichgeblieben ist, sich verbessert oder sich verschlechtert hat, so dass daraus eine Aussage zum Wohlfühlfaktor im Erfassungsbereich 1 getroffen werden kann.

Neben den erfassten Personen kann entweder von mindestens einer Kamera 3 im Erfassungsbereich 1 oder mittels mindestens eines in Fig. 1 nicht dargestellten zusätzlichen Sensors auch mindestens einer der Umgebungsparameter wie beispielsweise Uhrzeit, Wochentag, Umgebungstemperatur, Schallpegel, Helligkeit, Wellenlängenbereich des Umgebungslichts, Besucherdichte erfasst und in einer Recheneinrichtung (6, 7) abgespeichert werden. Die meisten dieser Daten können sich in jedem der Abbildungsbereiche 4.1 bis 4.4 unterscheiden und sind somit vorzugsweise getrennt zu erfassen.

Die Abspeicherung der Identifikationsdaten kann anonym und/oder personenbezogen erfolgen. Während gewöhnliche Kunden oder Besucher aufgrund der unbekannten persönlichen Daten nur anonym erfasst werden können, so ist es dennoch möglich, bei Messen oder Verkaufsflächen das Ausstellungs- oder Standpersonal nicht anonym zu erfassen, um bei den Auswertungen über das Besucher- oder Konsumentenverhalten die Daten nicht durch das eigene Personal verfälscht werden.

Dies kann auch in der Form bewerkstelligt werden, dass anstelle oder zusätzlich zu den personenbezogenen Daten für das Personal des Austellers oder Betreibers eine Funktionsangabe zur entsprechenden Identifikationsnummer abgespeichert werden. Dies vereinfacht die Nichtberücksichtigung des eigenen Personals bei den Auswertungen und Analyse über das Besucher- und/oder Konsumentenverhalten.

Des Weiteren können als Personenkennzeichen zu einer oder zu jeder Identifikationsnummer das Alter und/oder das Geschlecht und/oder aufgrund der bevorzugt besuchten Erfassungsobjekte 2 die Interessen abgespeichert werden. Durch diese Maßnahme lässt sich eine bessere Zielgruppen-orientierte Analyse ausführen.

Für eine Zielgruppen-orientierte Auswertung erfolgt eine statistische Auswertung der erfassten und/oder ermittelten Parameter nach mindestens einem Personenkennzeichen wie beispielsweise einer Altersgruppe, Geschlecht oder ähnlichen Parametern. Wie vorab angeführt, werden hiervon vorzugsweise die Identifikationsdaten von der Analyse ausgeschlossen, welchen als Personenkennzeichen eine Funktionsangabe zugeordnet ist.

### Bezugszeichenliste

- 1: Erfassungsbereich
- 2: Erfassungsobjekt
- 3: Kamera
- 4: Abbildungsbereich
- 5: Datenleitung
- 6: erste Recheneinrichtung
- 7: zweite Recheneinrichtung

## Patentansprüche

1. Computerimplementiertes Verfahren zur Erfassung und Bewertung einer Verhaltensweise mindestens einer Person in einem Erfassungsbereich (1), wobei das Verfahren folgende Schritte umfasst:
• Erfassen des Erfassungsbereiches (1) mit mindestens einer Kamera (3) mit einem zugehörigen Abbildungsbereich (4),
• Erfassen der mindestens einen in dem jeweiligen Abbildungsbereich (4) befindlichen Person mit der mindestens einen Kamera (3),
• Individuelle Erkennung der mindestens einen Person anhand von individuellen Biometriedaten und Abgleich der erfassten individuellen Biometriedaten mit bereits in einem definierten Zeitraum erfassten und in einem elektronischen Speicher abgespeicherten und abrufbaren, jeweils mit einer Identifikationsnummer zugeordneten Biometriedaten,
▪ für den Fall der in dem definierten Erfassungszeitraum erstmaligen Erfassung individueller Biometriedaten Vergabe einer neuen Identifikationsnummer für diese spezifischen Biometriedaten,
▪ für den Fall der in dem definierten Erfassungszeitraum wiederholten Erfassung von bereits in dem Speicher abgespeicherten Biometriedaten Zuordnung der erneuten Erfassung dieser Biometriedaten zur bereits hierzu zugehörigen Identifikationsnummer,
• Speicherung der aktuellen Erfassung der zu den Biometriedaten zugehörigen Person oder Personen anhand der Abspeicherung dieses Ereignisses zur jeweiligen Identifikationsnummer einschließlich der relevanten Kenngrößen wie Zeitpunkt, Ort, Abbildungsbereich.

2. Verfahren nach Anspruch 1, **dadurch gekennzeichnet, dass** der Erfassungsbereich (1) mindestens ein Erfassungsobjekt (2) mit jeweils mindestens einer einem Erfassungsobjekt (2) zugordneten Kamera (3) umfasst.

3. Verfahren nach einem der Ansprüche 1 bis 2, **dadurch gekennzeichnet, dass** alle dem Erfassungsbereich (1) zugeordneten Kameras (3) die erfassten Daten mittelbar oder unmittelbar an eine übergeordnete zweite Recheneinrichtung (7) übermittelt werden.

4. Verfahren nach einem der Ansprüche 1 bis 3, **dadurch gekennzeichnet, dass** anhand der Erfassung der mindestens einen Person sowie der Zuordnung der erfassten Daten einer Person zu einer Identifikationsnummer durch mindestens eine Kamera (3) einer Identifikationsnummer mindestens einer der Parameter Verweildauer im Erfassungsbereich (1), Laufwege, Verweildauer an einem jeweiligen Erfassungsobjekt (2) ausgewertet wird.

5. Verfahren nach einem der Ansprüche 1 bis 4, **dadurch gekennzeichnet, dass** für die mindestens eine erfasste Person oder im Falle von mehreren erfassten Personen für jede erfasste Person zu mindestens einem definierten Zeitpunkt ein Gefühlszustand erfasst und mittels eines Emotionsparameters klassifiziert wird, und wobei der mindestens eine Emotionsparameter mit einem jeweiligen Zeitstempel in einer ersten oder zweiten Recheneinrichtung (6, 7) zur zugehörigen Identifikationsnummer abgespeichert wird.

6. Verfahren nach Anspruch 5, **dadurch gekennzeichnet, dass** die Bestimmung des Emotionsparameters anhand von Gesichtsdaten einer zugehörigen Person erfolgt.

7. Verfahren nach einem der Ansprüche 5 bis 6, **dadurch gekennzeichnet, dass** die Erfassung und Hinterlegung einer Mehrzahl von Emotionsparametern über einen definierten Zeitraum hinweg wiederholt erfolgt.

8. Verfahren nach Anspruch 7, **dadurch gekennzeichnet, dass** anhand der Mehrzahl der erfassten und hinterlegten Emotionsparameter ein Emotionsverlauf und/oder ein Emotionsgradient als Funktion der Zeit erstellt wird.

9. Verfahren nach einem der Ansprüche 5 bis 8, **dadurch gekennzeichnet, dass** mindestens einer der Umgebungsparameter wie beispielsweise Uhrzeit, Wochentag, Umgebungstemperatur, Schallpegel, Helligkeit, Wellenlängenbereich des Umgebungslichts, Besucherdichte erfasst und in einer Recheneinrichtung (6, 7) abgespeichert wird.

10. Verfahren nach einem der Ansprüche 1 bis 9, **dadurch gekennzeichnet, dass** die Abspeicherung der Identifikationsnummern anonym und/oder personenbezogen erfolgt.

11. Verfahren nach einem der Ansprüche 1 bis 10, **dadurch gekennzeichnet, dass** als Biometriedaten das Gesicht und/oder die Größe und/oder die Statur einer jeden erfassten Person verwendet wird.

12. Verfahren nach einem Ansprüche 1 bis 11, **dadurch gekennzeichnet, dass** als Personenkennzeichen zu einer oder jeder Identifikationsnummer das Alter und/oder das Geschlecht und/oder Interessen abgespeichert werden.

13. Verfahren nach einem Ansprüche 1 bis 11, **dadurch gekennzeichnet, dass** als Personenkennzeichen eine Funktionsangabe abgespeichert wird.

14. Verfahren nach einem der Ansprüche 1 bis 13, **dadurch gekennzeichnet, dass** eine statistische Auswertung der erfassten und/oder ermittelten Parameter nach mindestens einem Personenkennzeichen erfolgt.

15. Verfahren nach Anspruch 14, **dadurch gekennzeichnet, dass** bei der statistischen Auswertung der erfassten und/oder ermittelten Parameter alle Identifikationsnummern ausgeschlossen werden, welchen als Personenkennzeichen eine Funktionsangabe zugeordnet ist.
